# EUROPEAN PATENT SPECIFICATION

(11) **EP 2 583 951 B1**
(45) Date of publication and mention of the grant of the patent: **22.04.2015**
(21) Application number: 12185067.1
(22) Date of filing: 19.09.2012
(51) Int. Cl.: C03B 33/027, C03B 33/03, C03B 33/037, C03B 33/07

(54) **Machine for performing cutting operations on laminated glass plates**
Maschine zum Durchführen von Schneideoperationen auf laminierten Glasplatten
Machine pour effectuer des opérations de découpe sur des plaques de verre feuilleté

(30) Priority: 18.10.2011 IT TO20110931
(43) Date of publication of application: 24.04.2013
(60) Divisional application: 13156901.4
(73) Proprietor: Biesse S.p.A., 61122 Chiusa di Ginestreto (Pesaro Urbino) (IT)
(72) Inventor: Sideri, Paolo, 61122 Chiusa di Ginestreto (Pesaro Urbino) (IT); Aimar, Giacomo, 61122 Chiusa di Ginestreto (Pesaro Urbino) (IT)
(74) Representative: Notaro, Giancarlo

(56) References cited:
- EP-A1- 1 975 131
- EP-A1- 2 113 492
- DE-A1- 10 157 833
- JP-A- 1 167 246
- US-B1- 6 810 784

## Description

The present invention relates to machines for performing cutting operations on laminated glass plates, of the type comprising:
- a fixed workbench, defining a supporting plane for receiving the plate to be machined,
- a fixed cutting bridge on which an upper carriage, carrying an upper incision tool, and a lower carriage, carrying a lower incision tool, are movably mounted in a direction Y parallel to the longitudinal direction of the cutting bridge, said cutting bridge being provided with actuating means for driving the movement of said carriages along the Y direction,
- means for moving said plate on the fixed workbench in a horizontal direction X orthogonal to the aforesaid direction Y,
- means for rotating the plate on said supporting plane, or a portion of the plate cut by said cutting bridge, said rotating means comprising:
   - a gripping member for gripping a rear edge of the plate (with reference to the advancing direction of the plate on the supporting plane), and at least one plate engagement member, adapted to engage said rear edge of the plate at a point spaced apart from said gripping member,
   - said gripping member and said engagement member being movable along the Y direction of the cutting bridge and along the X direction of the supporting plane of the plate, respectively, and
   - said machine further comprising an electronic control unit configured to drive a synchronous movement of said gripping member and said engagement member, along the Y direction and the X direction, respectively, in order to obtain a rotation of the plate on the supporting plane, and
   - wherein said gripping member comprises a suction-cup element configured to engage one face of the plate adjacent to said rear edge, said suction-cup element being supported so that it is freely rotatable around a vertical axis by one of said carriages and being movable by actuating means along said vertical axis between a position of engagement of the plate and a position spaced apart from the plate.

Machines of the type indicated above are known, for example, from documents ES 2265244 and EP 2113492.

In order to increase the versatility of the machine, at the same time rendering it capable of optimal operation in any operating condition, the present invention relates to a machine of the type described above, **characterized in that** said gripping member further comprises a second element cooperating with said suction-cup element configured to engage the face of the plate opposite to that engaged by said suction-cup element, adjacent to said rear edge, said second cooperating element being carried by a respective carriage so that it is freely rotatable about a vertical axis coinciding with the vertical axis of rotation of said suction-cup element and being movable by actuating means along said vertical axis between a position for engaging the plate and a position spaced apart from the plate, and
in that said electronic control unit is programmed to control both said suction-cup element and said cooperating element, by activating either one or both of these elements, depending upon the characteristics of the glass plate and/or the operative speed which is required.

With this solution it is possible to use different modes of operation of the same machine for processing plates with different characteristics, and in particular:
- only using the suction-cup on the lower carriage to rotate laminates treated with low-emissivity (so as not to affect the layer with low emission) which are generally of limited thickness (i.e. 33, 44 and 55 mm) and therefore do not require large forces for the rotation of the plate,
- using the two suction cups at the same time to perform the rotation of the laminated glass plates with a high thickness (for example 66, 88, 1010 and 1212 mm); such glass laminates being very heavy and therefore requiring considerable forces for the rotation of the plate, and
- using the two suction cups at the same time to speed up the rotation operation of the glass plates even with low thicknesses, but only in the case of laminates not treated with low-emissivity (low-e).

In a preferred embodiment, the cooperating element is also a suction-cup element.

In an alternative embodiment, the cooperating element is a pressing element configured to press the plate against the suction-cup element which engages the opposite face of the plate.

According to another characteristic in the machine according to the invention, said at least one engagement member comprises a first and a second engagement element which are adapted to engage the rear edge of the plate at successive stages, so as to obtain the required rotation of the plate.

Preferably, the first engagement element is carried by the fixed structure of the machine upstream of the plate and is movable in the advancing direction of the plate to apply a force in said direction on the rear edge in order to cause the plate to perform a first part of the required rotation. Still in said preferred embodiment, the second engagement element is carried by an auxiliary bridge which is movable below the supporting plane downstream of the fixed cutting bridge and is configured to engage the rear edge of the plate through a longitudinal slot of the supporting plane. The auxiliary bridge is movable in the advancing direction of the plate in order to pull the rear edge of the plate in that direction, through the second engagement element, until completion of the required rotation.

Preferably, the auxiliary bridge is provided with a number of stop elements which are configured to be raised above the supporting plane through slots arranged in the workbench so as to stop the plate at a position corresponding to the required cutting length, and the second engagement element being an additional element with respect to the stop elements which is arranged on the auxiliary bridge and is not adapted to be used for the aforesaid stop function of the plate at the required cutting length.

Furthermore, the actuating means for the axial movement of the suction-cup element and the actuating means for driving the axial movement of the cooperating element are chosen from a hydraulic actuator, a pneumatic actuator, or an electro-mechanical actuator comprising an electric motor and a screw-end-nut system driven by the electric motor.

Thanks to these additional characteristics, it is possible to achieve rotation of the plate even when the rear edge of the plate is initially positioned too far upstream of the cutting line defined by said cutting bridge.

The invention will now be described, purely by way of non-limiting example, with reference to the figures of the accompanying drawings, wherein:
- Figures 1 to 3 refer to the machines of the prior art,
- Figures 4 and 5 are a schematic view and a plan view on an enlarged scale, respectively, of a portion of the machine according to the present invention,
- Figures 6-8, 11, and 13-17 are plan views which show some steps of the rotating operation of the plate, in sequence, and
- Figures 9, 10, and 12 are schematic views on an enlarged scale of a portion of the machine in different steps of the rotating operation of the plate.

In the following description various specific details are illustrated aimed at providing a thorough understanding of the embodiments. The embodiments can be implemented without one or more of the specific details, or with other methods, components, materials, etc. In other cases, structures, construction details, materials, or known operations are not illustrated or described in detail, as they can be implemented in any known way, and as also, when considered separately, they do not fall within the context of the present invention

The cutting operation of laminated glass plates is very complex. These plates, the use of which has become increasingly common in cases where, in the event of accidental impacts, the glass must not shatter, include an upper glass plate, a lower glass plate and an intermediate plate or film of synthetic plastic material, usually polyvinyl butyral (PVB).

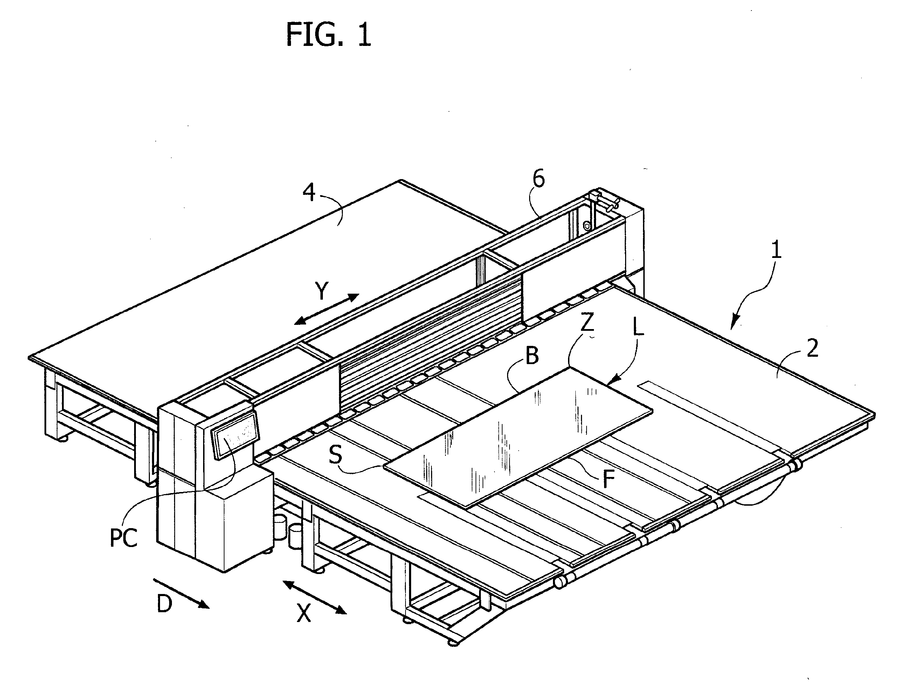

Automatic cutting of laminated glass plates is obtained with machines of the type illustrated in Figure 1, comprising a workbench 1, defining a supporting plane 2 for the glass plates L, a fixed bridge 6, and a supply plane 4 of the plates. The cutting of the laminated glass plate L is obtained with a first incision step of the upper and lower plates, a breaking step to separate into two portions each of the upper and lower plates, a softening step of the plastic plate and a detachment or tearing step of the plastic plate to obtain a total separation of the two portions of the laminated glass plate.

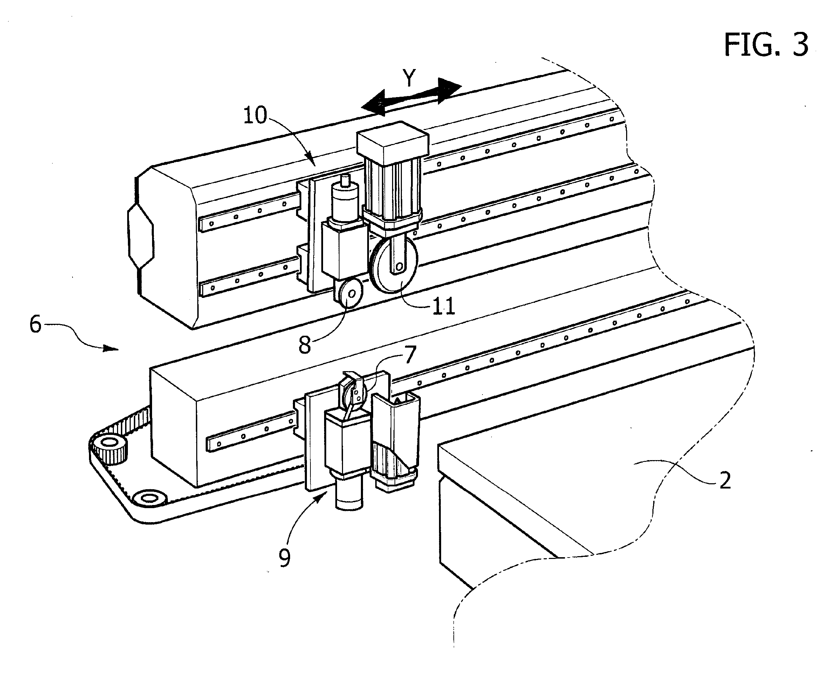

Due to the relative complexity of such operations, the bridge 6 is fixed with respect to the workbench, as it is a very complex and heavy structure. One example of an embodiment of the devices arranged on the fixed bridge 6 is visible in the attached figure 3, which also refers to the prior art. The fixed bridge 6 comprises roller incision tools 7 and 8 arranged, respectively, above and below the worktable 2, carried respectively by two carriages, 9 and 10, slidable along the Y direction on the bridge 6. The bridge 6 further comprises means for breaking the upper plate and the lower plate, between which a breaking wheel is included, for example, of the type indicated with the reference numeral 11 in Figure 3. Means for heating the plastic film (not shown) are also provided that intervene following the breaking operation, prior to the detachment step.

As a consequence of the aforesaid structure and arrangement, these machines are only able to perform cutting of laminated glass plates along a straight line defined by the longitudinal direction of the fixed bridge 6. The plate must then be rotated into different positions below the cutting bridge 6 in order to perform straight cuts along its different sides. For example, in order to cut a starting plate multiple times to obtain smaller plates, the plate is divided into several transverse strips and after each strip is cut it is rotated 90° to divide it into more parts with subsequent cutting operations.

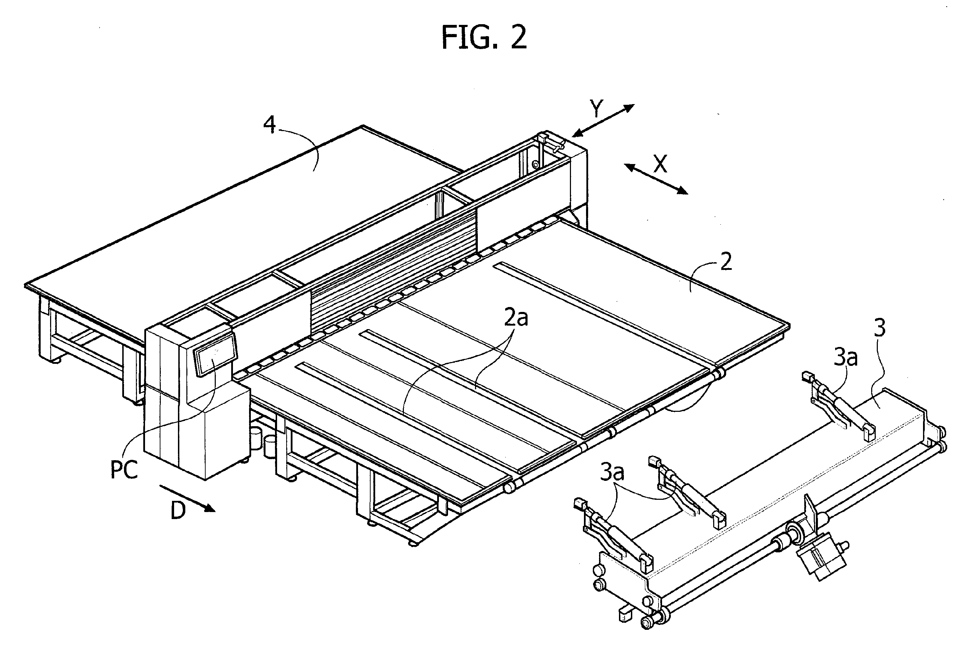

In the following description, reference will be made to a machine for cutting glass plates, in particular for laminated glass plates, of the type illustrated in Figures 1 and 2. Therefore the same references will be used hereinafter that were used in these figures to indicate the parts of the machine that remain unchanged, and new references will be given to the modified parts.

The machine according to the present invention comprises a fixed workbench 1, defining a supporting plane 2 intended for receiving the plate L to be processed and a fixed cutting bridge 6 on which an upper carriage 10 and a lower carriage 9 are movably mounted in a Y direction parallel to the longitudinal direction of the cutting bridge 6. The cutting bridge 6 is also provided with actuating means (not illustrated) for driving the movement of the carriages 9 and 10 along the Y direction.

In the present description and in the attached drawings, the constructional details of the cutting machine, the carriages 9 and 10 and the way in which they are slidably mounted along the cutting bridge 6, the incision rollers 7 and 8 and thrust rollers 11 and the way in which they are movably mounted on respective carriages 9 and 10 are not shown, as they can be made in any known way and as also, when considered separately, they do not fall within the context of the present invention. The same applies to the way in which movements of the carriages 9 and 10, and the rollers 7, 8, and 11, are controlled. These movements, in accordance with the prior art, are controlled by respective electric motors and drive transmissions not illustrated and not described. Moreover, still in accordance with the prior art, the electric motors that drive the various moving parts of the machine are controlled by electronic control means programmable to allow the execution of predetermined machining cycles on the plates L to be processed.

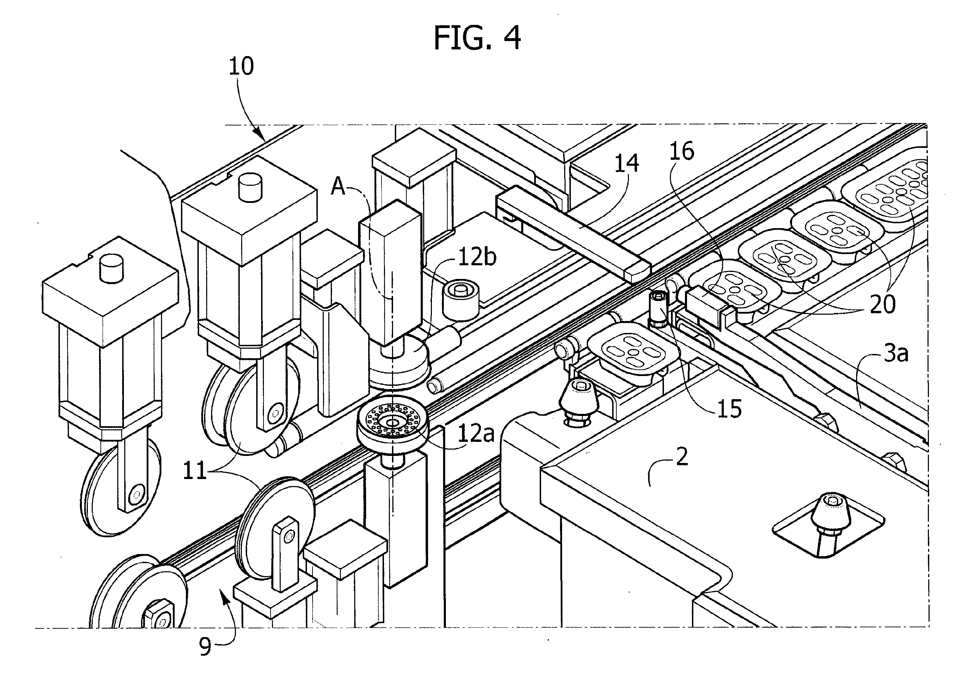

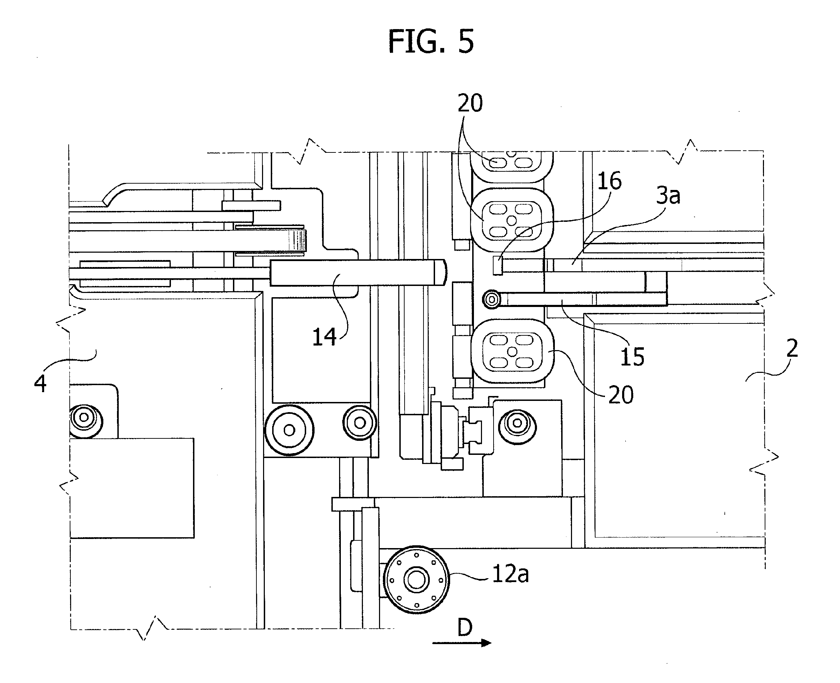

With particular reference to Figures 4 and 5, the machine according to the invention comprises two suction-cup elements 12a and 12b carried respectively by the aforesaid lower and upper carriages 9 and 10. The two suction-cups are coaxial and are freely rotatable about a vertical axis A. The suction-cups communicate with a vacuum source not shown in the drawings. The lower suction-cup 12a engages the lower face of the plate L adjacent to the rear edge B of the plate, while the upper suction-cup 12b engages the upper face. The two suction-cups are carried in a freely rotatable manner about the vertical axis A by the respective carriage. The suction-cups are also movable by actuating means along the vertical axis A between an engagement position of the plate and a position spaced apart from the plate. The two suction-cups mounted on the carriages 9 and 10 are movable along the Y direction, or rather, along the cutting line, thanks to actuating means for driving the motion of the carriages (not shown in the figures). The maximum size of the suction-cup 12a is defined by the empty space available between the work plane 2, upstream, and the supply plane 4, downstream, of the cutting line defined by the cutting bridge 6.

As an alternative to using two suction cup elements, a second element 12b cooperating with the suction cup element 12a can be used, configured to engage the face of the plate L opposite to that engaged by the suction cup 12a.

The cooperating element 12b may be a pressing element configured for pressing the plate L against the suction cup element 12a which engages the opposite face of the plate L.

In a known manner, the machine according to the present invention further comprises a plurality of suction-cups 20, aligned and arranged on the edge of the work plane 2, which extend in the Y direction, i.e. parallel and adjacent to the cutting line. The suction-cups 20 communicate with a vacuum source, not shown. These suction-cups 20 are used to block the plate L during cutting and breaking operations.

Still with reference to Figures 4 and 5, the machine according to the present invention comprises a first engagement element in the form of thrust blade 14 and a second engagement element in the form of drive pin 15, configured for intervening on the rear edge B of the plate L in successive stages, in order to obtain the required rotation of the plate.

An electronic control unit PC is also provided (see Figures 1 and 2), configured to control a synchronous movement of the gripping suction-cups 12a and 12b along the Y direction, as well as the two engagement members (thrust blade 14 and drive pin 15) in the X direction to obtain a rotation of the plate on the support plane 2. The electronic control unit PC is programmed to control both suction-cup elements, by activating either one or both suction-cup elements, depending on the characteristics of the glass plate and/or the required operating speed.

The thrust blade 14 is carried by the fixed structure of the machine upstream of the plate and the cutting line and is movable in the advancing direction of the plate (indicated in the drawings with the reference D) to exert a thrust in the same direction on the rear edge B of the plate in order for the plate to complete a first part of the rotation required.

The drive pin 15 is carried by an auxiliary bridge 3 movable below the supporting plane downstream of the fixed cutting bridge and is adapted to engage the rear edge B of the plate L through a longitudinal slot 2a of the support plane. The auxiliary bridge 3 is movable in the advancing direction of the plate D in order to pull the rear edge B of the plate L in that direction by means of the driving pin 15, until completion of the required rotation.

The auxiliary bridge can, for example, be a positioning abutment bridge 3, known per se, typically used in order to position the plate L for cutting to length of a strip starting from a semi-processed plate. As known, the positioning abutment bridge 3 comprises a plurality of articulated arms 3a on which stop members or abutment feet 16 are mounted, against which the front edge F of the plate is placed to position the plate in order to cut it to the required size.

The auxiliary bridge 3 is provided with a series of stop elements 16 that can be raised above the support plane 2 through slots 2a arranged in the workbench 1 and configured for stopping the plate in the position corresponding to the required cutting length. The second engagement element is an additional element with respect to the stop elements and is arranged on the auxiliary bridge 3; it is not adapted to be used for the aforesaid stop function of the plate at the required cutting length.

The actuating means of the axial displacement of the suction-cup element 12a and actuating means of the axial displacement of the cooperating element 12b are selected from a hydraulic actuator, a pneumatic actuator, or an electro-mechanical actuator comprising an electric motor and a screw-end-nut system driven by the electric motor.

The drive pin 15 is mounted parallel to the first articulated arm 3a and is also carried by the auxiliary bridge 3. The pin 15 runs in the same longitudinal slot 2a of the support plane, which in this case is wider.

The drive pin 15 comes into operation at a later time, after the rear edge B of the plate L has been moved downstream by a sufficient quantity. Indeed, after cutting and separation, the cut plate is blocked thanks to the suction cups 12a and 12b and the thrust blade 14 imparts a first rotation to the plate about the fulcrum defined by the suction-cups themselves.

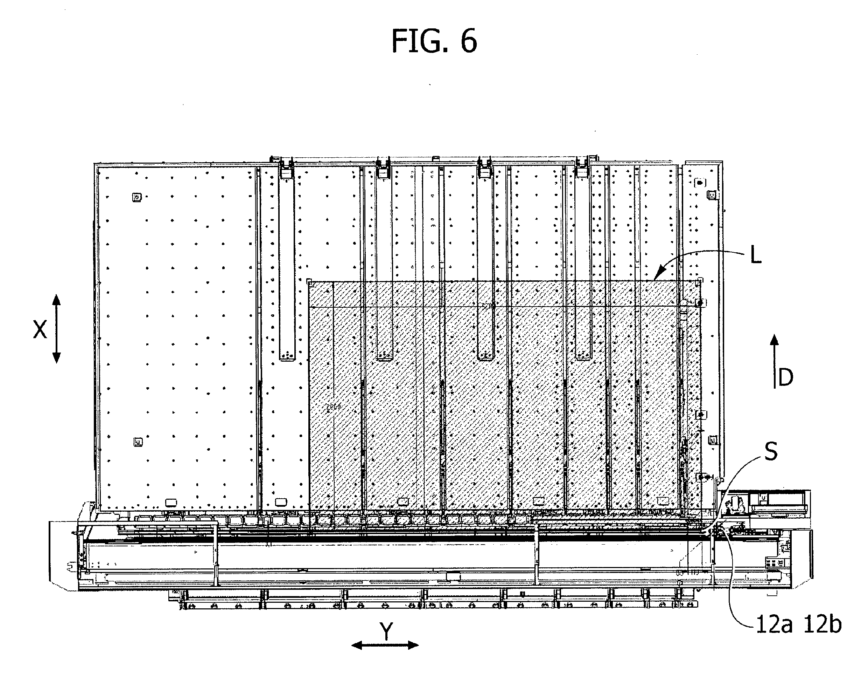

Figure 6 illustrates the first step of the rotation sequence. In particular, the plate L has its rear edge B positioned on the cutting line and the suction-cups 12a and 12b are in their resting condition, and positioned at the side of the cutting bridge. This step terminates with the transverse cut and retreating of the plate on the supply plane 4.

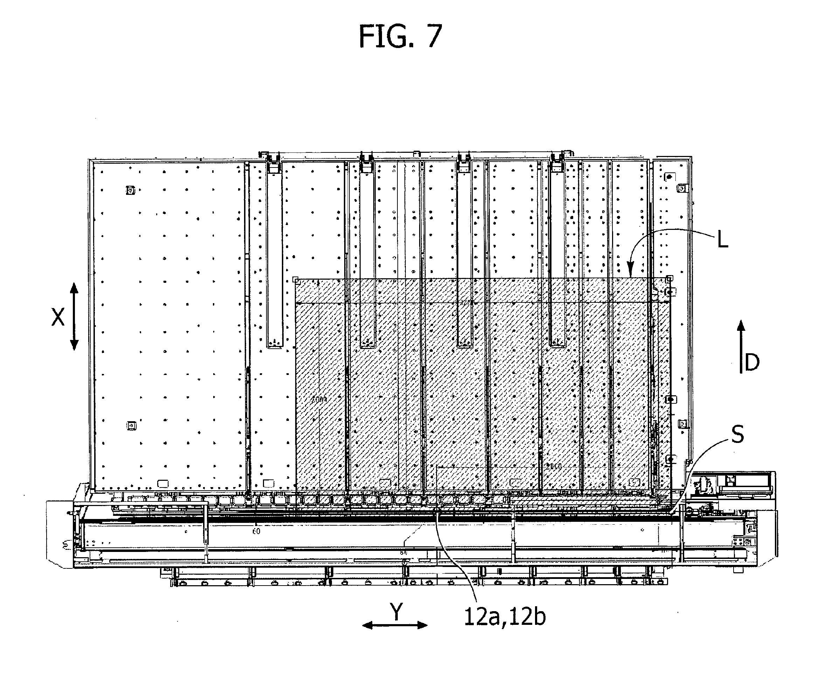

In a second step (Figure 7) the retreat of the plate is carried out thanks to the positioning bridge or abutment bridge 3 (thanks to a thrust by the abutment feet). In this step, the suction-cups 12a and 12b are carried, via the two carriages 9 and 10, into an intermediate position of the cutting bridge 6 and enter into contact with the plate L (either one or both suction-cup), or rather in their operating condition. In this way the plate L is constrained at the point where it is in contact with the suction-cups 12a and 12b.

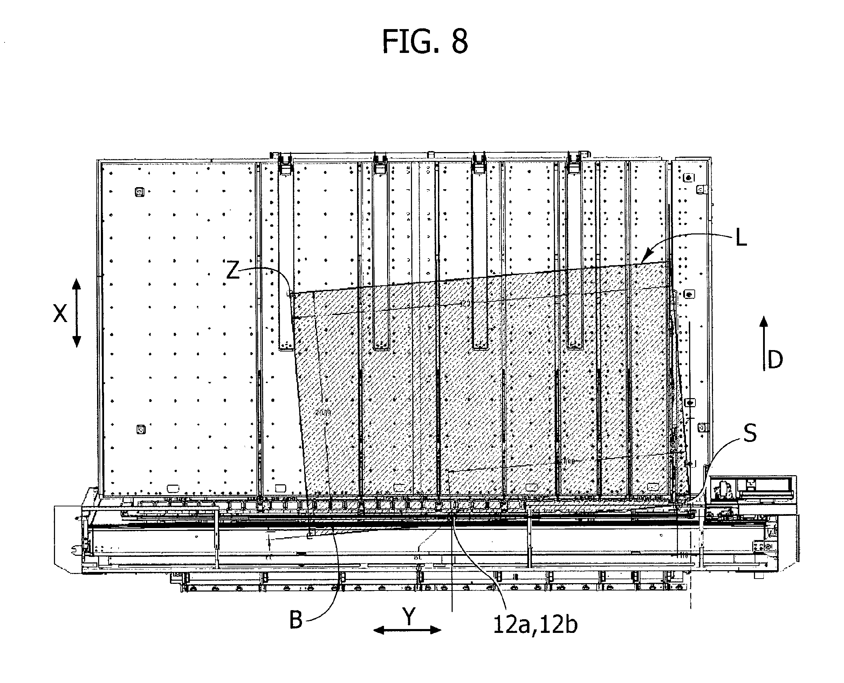

Figure 8 shows the final condition of the third step. During the third step the thrust blade 14 intervenes in order to impart a first rotation to the plate L around the fulcrum defined by the suction-cups 12a and 12b. In particular, the thrust blade 14 acts on the rear edge B (with respect to the advancing direction D of the plate) and in the vicinity of a corner S. In this way, the plate L is forced to rotate around the vertical axis A of the suction-cups 12a and 12b, moving the corner S in the advancing direction D of the plate. The opposite corner Z is moved in the opposite direction, and therefore is positioned on the supply plane 4 upstream of the cutting bridge. In this step the carriages that carry the suction-cups are stationary.

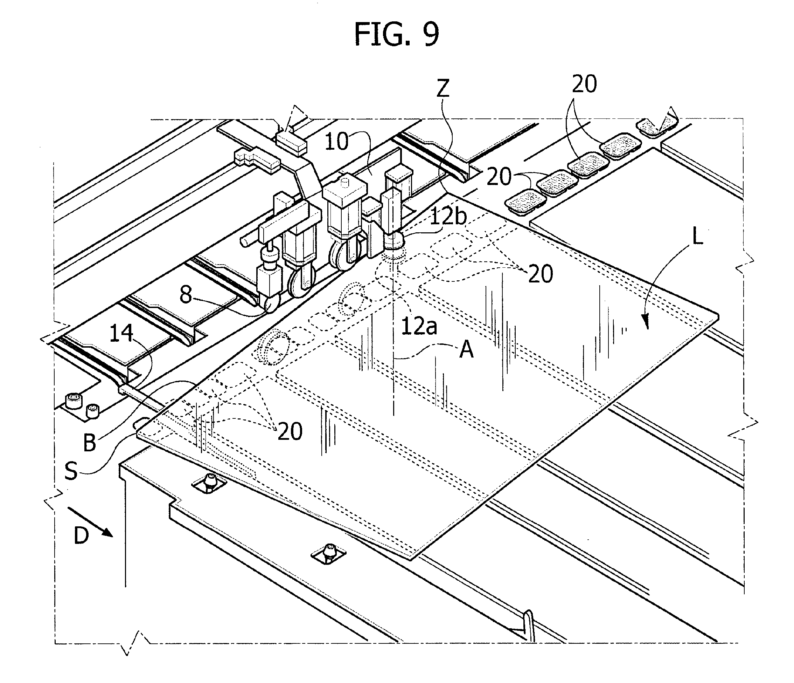

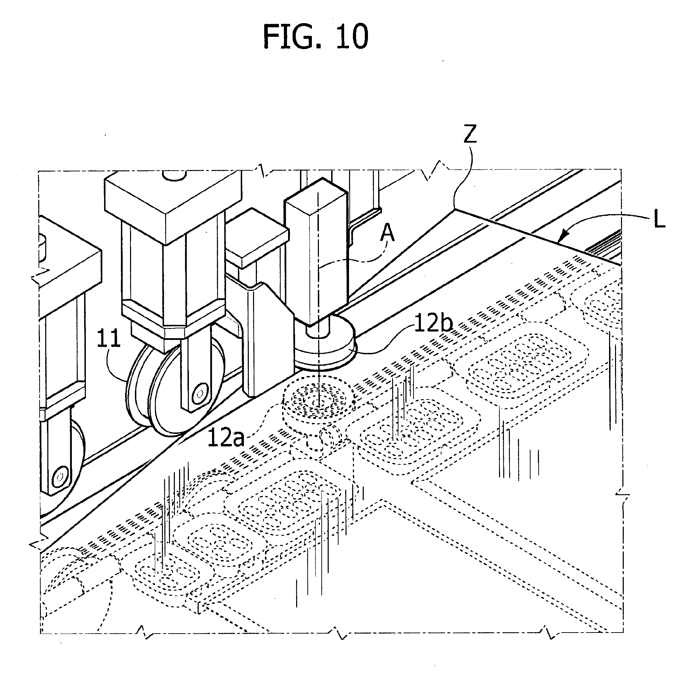

Figures 9 and 10 show the same step shown in figure 8, but in a different perspective. In particular, Figure 10 is an enlarged detail of Figure 9. Here it is possible to see the two suction-cups 12a and 12b in the operating condition of engagement of the plate L.

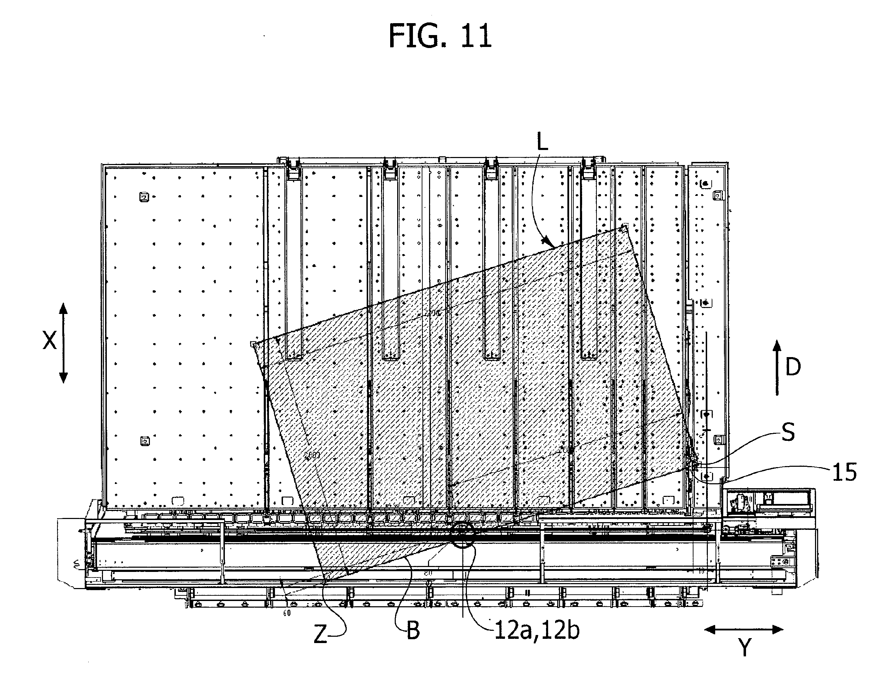

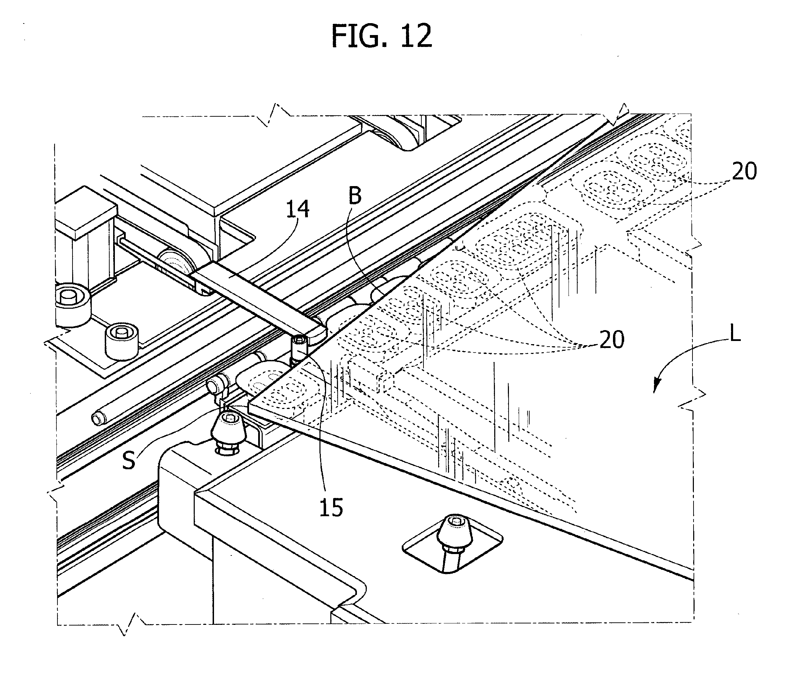

Figures 11 and 12 show the fourth stage of the rotation sequence of the plate L. In this step the drive pin 15 comes into play, which emerges upstream of the rear edge B of the plate in the vicinity of the corner S. The drive pin 15 is always downstream with respect to the cutting line, and is in the form of an idle roller with a vertical axis freely rotatable about its axis. It is dragged in the advancing direction D of the plate L by the auxiliary bridge 3 which runs under the worktable 2 and drags the rear edge B of the plate. The plate which is engaged by the suction-cups 12a and 12b rotates around the vertical axis A. Its corner S advances on the work plane 2 downstream of the cutting bridge 6, while the opposite corner Z advances on the supply plane 4 of the plates, upstream of the cutting bridge 6. At the same time the suction-cups 12a and 12b are moved along the Y direction to follow and support the rotation of the plate L. This step therefore has a combined movement of the drive pin 15 carried by the auxiliary bridge 3 and the carriages 9 and 10 that carry the suction-cups 12a and 12b.

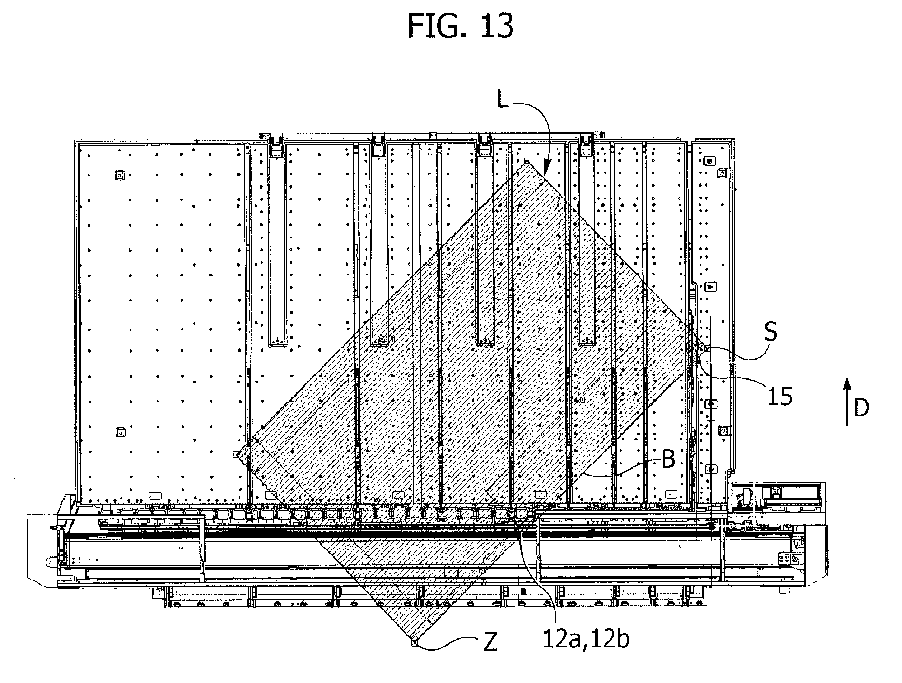

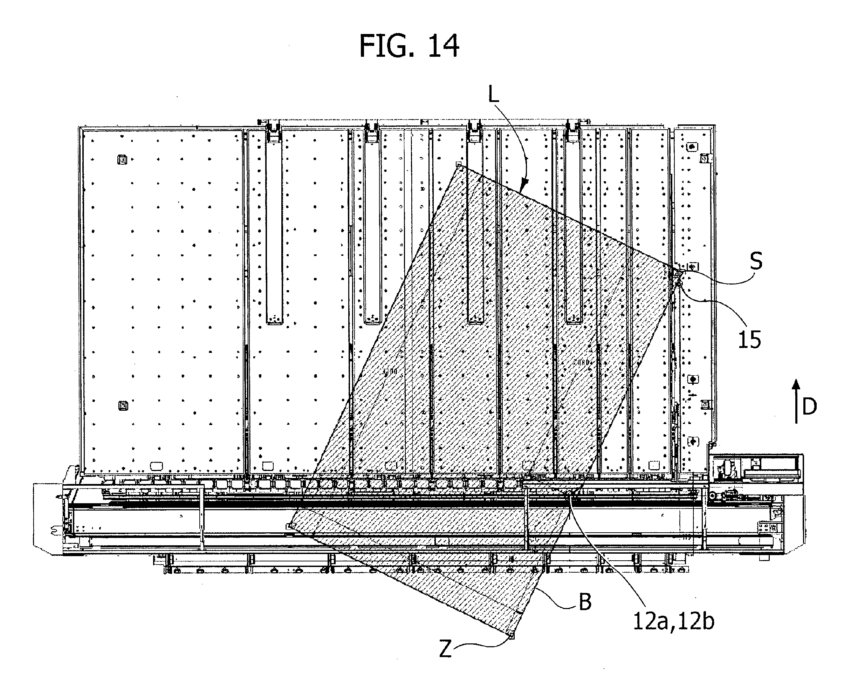

Figure 13 shows a continuation step of the rotation of the plate which exploits the combined movement of the auxiliary bridge 3 and the carriages 9 and 10 that carry the suction cups 12a and 12b, up to the maximum possible capacity of the auxiliary bridge (illustrated in Figure 14).

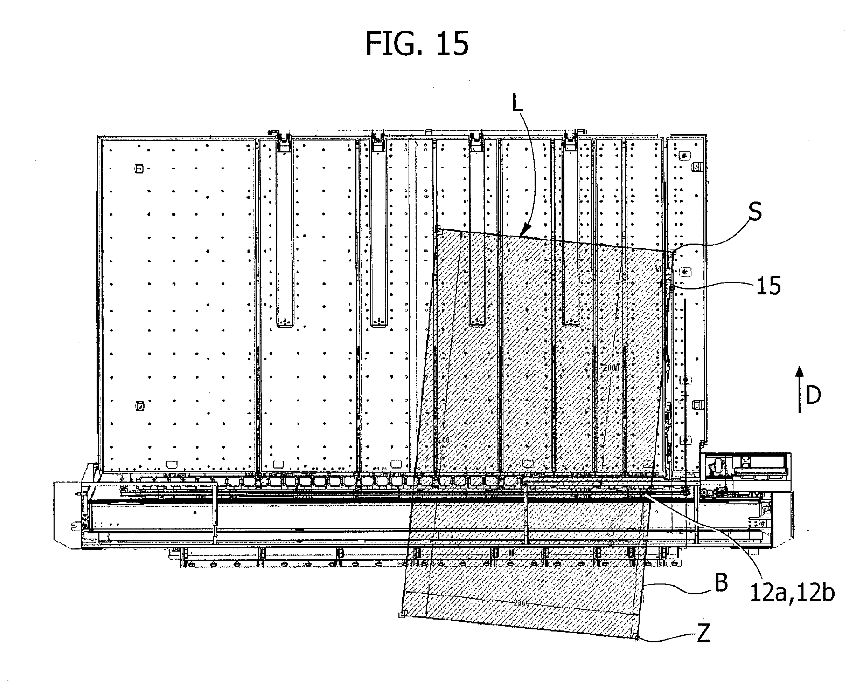

Figure 15 instead shows a step in which the rotation continues by means of the movement of the carriages 9 and 10 that carry the suction cups 12a and 12b, while the auxiliary bridge 3 remains stationary and the rolling of the plate of glass occurs against the drive pin 15.

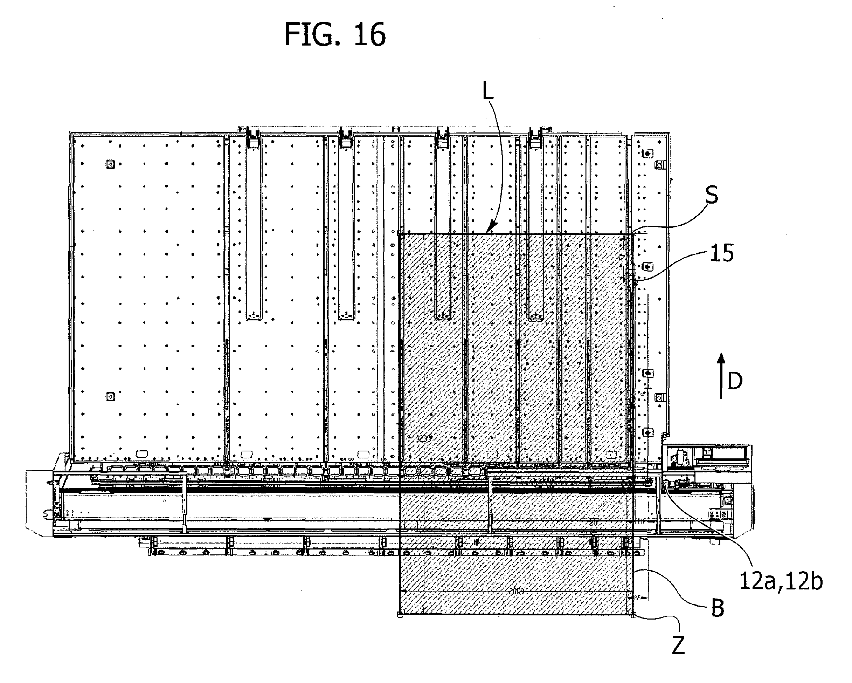

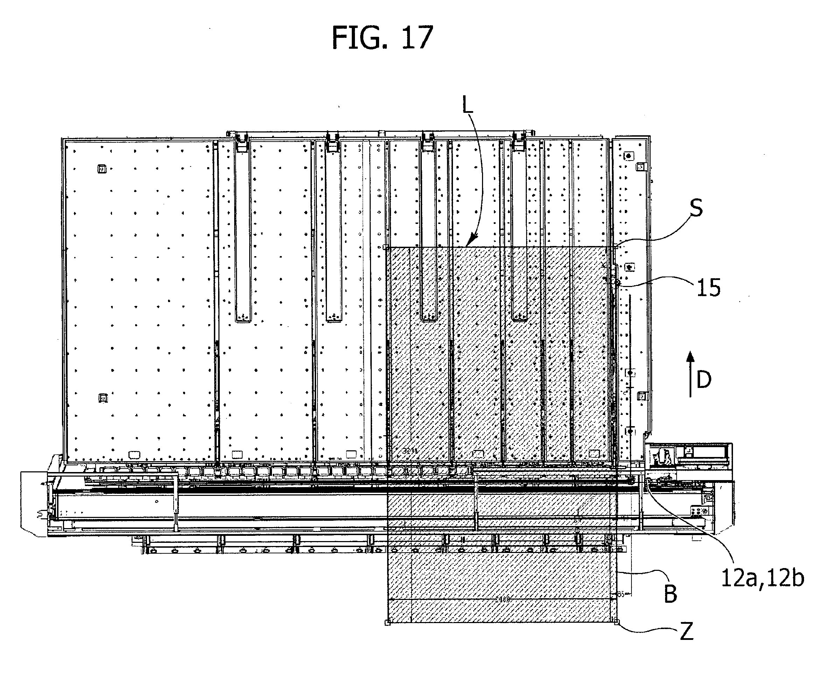

Finally, Figures 16 and 17 show the stopping steps of the rotation via halting of the carriages 9 and 10 and the squaring and the measured positioning (via the auxiliary abutment bridge 3) for the new cut.

As illustrated and described, the drive pin 15 never exceeds the cutting line, but comes into contact with the rear edge B of the plate L after the plate has been pushed beyond the cutting line (i.e. downstream of the cutting bridge 6) by the thrust blade 14. In addition, the drive pin 15 is not aligned with the abutment feet 16, but protrudes towards the upstream part of the machine. It does not use an abutment foot in order to avoid its wear.

Consequently, without prejudice to the principle of the invention, the details of construction and the embodiments may vary, even significantly, with respect to those described and illustrated, purely by way of non-limiting example, without thereby departing from the scope invention, as defined by the claims that follow.

## Claims

1. Machine for performing cutting operations on laminated glass plates (L), comprising:
- a workbench (1), defining a supporting plane (2) which is to receive the plate (L) to be worked,
- a fixed cutting bridge (6) on which an upper carriage (10), carrying an upper incision tool (8), and a lower carriage (9), carrying a lower incision tool (7), are movably mounted in a direction Y parallel to the longitudinal direction of the cutting bridge (6), said cutting bridge (6) being provided with actuating means for driving the movement of said carriages (9, 10) along the Y direction,
- means for moving said plate (L) on the fixed workbench (1) in a horizontal direction X orthogonal to said Y direction,
- means (12a, 12b, 14, 15) for causing the plate, or a plate portion cut by said cutting bridge (6), to rotate on said supporting plane, said rotating means comprising:
- a gripping member (12a) for gripping a rear edge (B) of the plate (with reference to the direction of advancement of the plate on the supporting plane), and at least one plate engagement member (14, 15) adapted to engage said rear edge (B) of the plate at a point spaced apart from said gripping member (12a),
- said gripping member (12a) and said engagement member (14, 15) being respectively movable along the Y direction of the cutting bridge (6) and along the X direction of the plate supporting plane (2), and
- said machine further comprising an electronic control unit (PC) configured to drive a synchronous movement of said gripping member (12a) and said engagement member (14, 15) respectively along the Y direction and the X direction to obtain a rotation of the plate on the supporting plane (2), and
- wherein said gripping member (12a) comprises at least one suction-cup element (12a) configured to engage one face of the plate adjacent to said rear edge (B), said suction-cup element (12a) being supported so that it is freely rotatable around a vertical axis (A) by one of said carriages (9,10) and being movable by actuating means along said vertical axis (A) between a position for engaging the plate and a positions spaced apart from the plate,
**characterized in that** said gripping member (12a) further comprises a second element (12b) cooperating with said suction-cup element and configured to engage the face of the plate (L) opposite to that engaged by the suction-cup element (12a) adjacent to said rear edge (B), said second cooperating element (12b) being carried by a respective carriage (10) so that it is freely rotatable around a vertical axis coincident with the vertical axis (A) of rotation of said suction-cup element and being movable by actuating means along said vertical axis (A) between a position for engaging the plate (L) and a position spaced apart from the plate, and
**in that** said electronic control unit (PC) is programmed to control both said suction-cup element (12a) and said cooperating element (12b), by activating only one or both these elements, depending upon the characteristics of the glass plate and/or the operative speed which is required.

2. Machine according to claim 1, **characterized in that** said cooperating element (12b) is also a suction-cup element.

3. Machine according to claim 1, **characterized in that** said cooperating element (12b) is a pressing element configured to press the plate (L) against the suction-cup element (12a) which engages the opposite face of the plate (L).

4. Machine according to claim 1, **characterized in that** said suction-cup element (12a) is carried by the lower carriage (9) of the cutting bridge (6) and is provided for engaging the lower face of the plate (L), whereas said pressing element (12b) is carried by the upper carriage (10) of the cutting bridge (6) and is provided for engaging the upper face of the plate (L).

5. Machine according to any of the previous claims **characterized in that** said at least one engagement member (14, 15) comprises first (14) and second (15) engagement elements which are adapted to engage said rear edge (B) of the plate at different subsequent stages, so as to obtain the required rotation of the plate.

6. Machine according to claim 5, **characterized in that** said first engagement element (14) is carried by the fixed structure of the machine upstream of the plate and is movable in the advancement direction (D) of the plate to apply a force in said direction on said rear edge (B) in order to cause the plate to perform a first part of the required rotation.

7. Machine according to claim 5, **characterized in that** said second engagement element (15) is carried by an auxiliary bridge (3) which is movable below the supporting plane (2) downstream of the fixed cutting bridge (6) and is configured to engage said rear edge (B) of the plate through a longitudinal slot (2a) of said supporting plane (2), said auxiliary bridge (3) being movable in the direction of advancement of the plate for pulling in said direction said rear edge (B) of the plate through said second engagement element (15), until completion of the required rotation.

8. Machine according to claim 7, **characterized in that** said auxiliary bridge (3) is provided with a number of stop elements (16) which are configured to be raised above the supporting plane (2) through slots (2a) provided in the workbench (1) so as to stop the plate at a position corresponding to the required cutting length, said second engagement element being an additional element with respect to said stop elements which is provided on said auxiliary bridge (3) and is not adapted to be used for the above mentioned function of stopping the plate (L) at the required cutting length.

9. Machine according to claim 1, **characterized in that** the actuating means for actuating the axial movement of said suction-cup element (12a) and the actuating means for driving the axial movement of said cooperating element (12b) are chosen among a hydraulic actuator, a pneumatic actuator, and an electro-mechanical actuator comprising an electric motor and a screw-end-nut system driven by the electric motor.

## Patentansprüche

1. Maschine zum Durchführen von Scheidvorgängen auf laminierten Glasplatten (L), umfassend:
- eine Werkbank (1), die eine Tragebene (2) definiert, die die zu bearbeitende Platte (L) aufnehmen soll,
- eine fest stehende Schneidbrücke (6), auf der ein oberer Schlitten (10), der ein oberes Schnittwerkzeug (8) trägt, und ein unterer Schlitten (9), der ein unteres Schnittwerkzeug (7) trägt, in einer zur Längsrichtung der Schneidbrücke (6) parallelen Richtung Y beweglich montiert sind, wobei die Schneidbrücke (6) mit Betätigungsmitteln zum Steuern der Bewegung der Schlitten (9, 10) entlang der Y-Richtung versehen ist,
- Mittel zum Bewegen der Platte (L) auf der fest stehenden Werkbank (1) in einer zur Y-Richtung rechtwinkligen horizontalen Richtung X,
- Mittel (12a, 12b, 14, 15) zum Drehen der Platte, oder eines durch die Schneidbrücke (6) geschnittenen Plattenabschnitts, auf der Tragebene, wobei die Drehmittel umfassen:
- ein Einspannglied (12a) zum Einspannen einer Hinterkante (B) der Platte (in Bezug auf die Vorschubrichtung der Platte auf der Tragebene) und mindestens ein Platteneingreifglied (14, 15), das so angepasst ist, dass es an einem von dem Einspannglied (12a) beabstandeten Punkt in die Hinterkante (B) der Platte eingreift,
- wobei das Einspannglied (12a) und das Eingreifglied (14, 15) entlang der Y-Richtung der Schneidbrücke (6) bzw. entlang der X-Richtung der Plattentragebene (2) beweglich sind und
- die Maschine ferner eine elektronische Steuerung (PC) umfasst, die so konfiguriert ist, dass sie eine synchrone Bewegung des Einspannglieds (12a) bzw. des Eingreifglieds (14, 15) entlang der Y-Richtung und der X-Richtung steuert, um eine Drehung der Platte auf der Tragebene (2) zu erreichen, und
- wobei das Einspannglied (12a) mindestens ein Saugnapfelement (12a) umfasst, das so konfiguriert ist, dass es in eine Fläche der Platte benachbart zu besagter Hinterkante (B) eingreift, wobei das Saugnapfelement (12a) so abgestützt ist, dass es durch einen der Schlitten (9, 10) frei um eine vertikale Achse (A) drehbar ist, und durch Betätigungsmittel entlang der vertikalen Achse (A) zwischen einer Position zum Eingreifen in die Platte und einer von der Platte beabstandeten Position beweglich ist,
**dadurch gekennzeichnet, dass** das Einspannglied (12a) ferner ein zweites Element (12b) umfasst, das mit dem Saugnapfelement zusammenwirkt und so konfiguriert ist, dass es in die Fläche der Platte (L) eingreift, die derjenigen gegenüberliegt, in die das Saugnapf-element (12a) benachbart zur Hinterkante (B) eingreift, wobei das zweite mitwirkende Element (12b) von einem jeweiligen Schlitten (10) so getragen wird, dass es frei um eine vertikale Achse drehbar ist, die mit der vertikalen Achse (A) der Drehung des Saugnapfelements zusammenfällt, und durch Betätigungsmittel entlang der vertikalen Achse (A) zwischen einer Position zum Eingreifen in die Platte (L) und einer von der Platte beabstandeten Position beweglich ist, und
dass die elektronische Steuerung (PC) so programmiert ist, dass sie sowohl das Saugnapfelement (12a) als auch das mitwirkende Element (12b) durch Aktivieren nur eines oder beider dieser Elemente in Abhängigkeit von den Eigenschaften der Glasplatte und/oder der erforderlichen Arbeitsgeschwindigkeit steuert.

2. Maschine nach Anspruch 1, **dadurch gekennzeichnet, dass** das mitwirkende Element (12b) ebenfalls ein Saugnapfelement ist.

3. Maschine nach Anspruch 1, **dadurch gekennzeichnet, dass** das mitwirkende Element (12b) ein Presselement ist, das so konfiguriert ist, dass es die Platte (L) gegen das in die gegenüberliegende Fläche der Platte (L) eingreifende Saugnapfelement (12a) presst.

4. Maschine nach Anspruch 1, **dadurch gekennzeichnet, dass** das Saugnapfelement (12a) von dem unteren Schlitten (9) der Schneidbrücke (6) getragen wird und für das Eingreifen in die untere Fläche der Platte (L) vorgesehen ist, während das Presselement (12b) von dem oberen Schlitten (10) der Schneidbrücke (6) getragen wird und für das Eingreifen in die obere Fläche der Platte (L) vorgesehen ist.

5. Maschine nach einem der vorangehenden Ansprüche, **dadurch gekennzeichnet, dass** das mindestens eine Eingreifglied (14, 15) erste (14) und zweite (15) Eingreifelemente umfasst, die so angepasst sind, dass sie in unterschiedlichen nachfolgenden Stadien in die Hinterkante (B) der Platte eingreifen, um die erforderliche Drehung der Platte zu erreichen.

6. Maschine nach Anspruch 5, **dadurch gekennzeichnet, dass** das erste Eingreifelement (14) von der fest stehenden Struktur der Maschine, die der Platte vorgelagert ist, getragen wird und in der Vorschubrichtung (D) der Platte beweglich ist, um in dieser Richtung eine Kraft auf die Hinterkante (B) auszuüben, um zu bewirken, dass die Platte einen ersten Teil der erforderlichen Drehung ausführt.

7. Maschine nach Anspruch 5, **dadurch gekennzeichnet, dass** das zweite Eingreifelement (15) von einer Hilfsbrücke (3) getragen wird, die unterhalb der Tragebene (2), der fest stehenden Schneidbrücke (6) nachgelagert, beweglich ist, und so konfiguriert ist, dass es durch einen Längsschlitz (2a) der Tragebene (2) in die Hinterkante (B) der Platte eingreift, wobei die Hilfsbrücke (3) in der Vorschubrichtung der Platte beweglich ist, um die Hinterkante (B) der Platte in dieser Richtung bis zur Vollendung der erforderlichen Drehung durch das zweite Eingreifelement (15) zu ziehen.

8. Maschine nach Anspruch 7, **dadurch gekennzeichnet, dass** die Hilfsbrücke (3) mit einer Anzahl von Anschlagelementen (16) versehen ist, die so konfiguriert sind, dass sie durch in der Werkbank (1) vorgesehene Schlitze (2a) über die Tragebene (2) angehoben werden, um die Platte in einer Position, die der erforderlichen Schnittlänge entspricht, anzuhalten, wobei das zweite Eingreifelement ein zusätzliches Element in Bezug auf die Anschlagelemente ist, das auf der Hilfsbrücke (3) vorgesehen ist und nicht für die Verwendung für die oben erwähnte Funktion des Anhaltens der Platte (L) bei der erforderlichen Schnittlänge angepasst ist.

9. Maschine nach Anspruch 1, **dadurch gekennzeichnet, dass** die Betätigungsmittel zum Auslösen der axialen Bewegung des Saugnapfelements (12a) und die Betätigungsmittel zum Steuern der axialen Bewegung des mitwirkenden Elements (12b) aus einem hydraulischen Stellglied, einem pneumatischen Stellglied und einem elektromechanischen Stellglied, das einen Elektromotor und ein durch den Elektromotor angetriebenes Schraube-und-Mutter-System umfasst, ausgewählt sind.

## Revendications

1. Machine pour effectuer des opérations de coupe sur des plaques de verre feuilleté (L), comprenant :
- un établi (1), définissant un plan de support (2) qui est destiné à recevoir la plaque (L) à usiner,
- un pont de coupe fixe (6) sur lequel un chariot supérieur (10), portant un outil d'incision supérieur (8), et un chariot inférieur (9), portant un outil d'incision inférieur (7), sont montés de manière mobile dans une direction Y parallèle à la direction longitudinale du pont de coupe (6), ledit pont de coupe (6) étant pourvu d'un moyen d'actionnement pour entraîner le déplacement desdits chariots (9, 10) le long de la direction Y,
- un moyen pour déplacer ladite plaque (L) sur l'établi fixe (1) dans une direction horizontale X perpendiculaire à ladite direction Y,
- un moyen (12a, 12b, 14, 15) pour amener la plaque, ou une partie de plaque coupée par ledit pont de coupe (6), à tourner sur ledit plan de support, ledit moyen de rotation comprenant :
- un élément de préhension (12a) pour la préhension d'un bord arrière (B) de la plaque (en référence à la direction d'avancement de la plaque sur le plan de support), et au moins un élément d'engagement de plaque (14, 15) adapté pour s'engager avec ledit bord arrière (B) de la plaque à un point espacé dudit élément de préhension (12a),
- ledit élément de préhension (12a) et ledit élément d'engagement (14, 15) pouvant se déplacer respectivement le long de la direction Y du pont de coupe (6) et le long de la direction X du plan de support de plaque (2), et
- ladite machine comprenant en outre une unité de commande électronique (PC) configurée pour entraîner un déplacement synchrone dudit élément de préhension (12a) et dudit élément d'engagement (14, 15) respectivement le long de la direction Y et de la direction X pour obtenir une rotation de la plaque sur le plan de support (2), et
- où ledit élément de préhension (12a) comprend au moins un élément de ventouse (12a) configuré pour s'engager avec une face de la plaque adjacente audit bord arrière (B), ledit élément de ventouse (12a) étant supporté de sorte qu'il puisse tourner librement autour d'un axe vertical (A) par l'un desdits chariots (9,10) et pouvant se déplacer par un moyen d'actionnement le long dudit axe vertical (A) entre une position d'engagement avec la plaque et une position espacée de la plaque,
**caractérisée en ce que** ledit élément de préhension (12a) comprend en outre un deuxième élément (12b) coopérant avec ledit élément de ventouse et configuré pour s'engager avec la face de la plaque (L) opposée à celle engagée par l'élément de ventouse (12a) adjacente audit bord arrière (B), ledit deuxième élément de coopération (12b) étant porté par un chariot respectif (10) de sorte qu'il puisse tourner librement autour d'un axe vertical coïncidant avec l'axe vertical (A) de rotation dudit élément de ventouse et pouvant se déplacer par un moyen d'actionnement le long dudit axe vertical (A) entre une position d'engagement avec la plaque (L) et une position espacée de la plaque, et
**en ce que** ladite unité de commande électronique (PC) est programmée pour commander à la fois ledit élément de ventouse (12a) et ledit élément de coopération (12b), en activant seulement l'un de ces éléments ou les deux, en fonction des caractéristiques de la plaque de verre et/ou de la vitesse de fonctionnement qui est requise.

2. Machine selon la revendication 1, **caractérisée en ce que** ledit élément de coopération (12b) est également un élément de ventouse.

3. Machine selon la revendication 1, **caractérisée en ce que** ledit élément de coopération (12b) est un élément de pression configuré pour presser la plaque (L) contre l'élément de ventouse (12a) qui s'engage avec la face opposée de la plaque (L).

4. Machine selon la revendication 1, **caractérisée en ce que** ledit élément de ventouse (12a) est porté par le chariot inférieur (9) du pont de coupe (6) et est prévu pour s'engager avec la face inférieure de la plaque (L), tandis que ledit élément de pression (12b) est porté par le chariot supérieur (10) du pont de coupe (6) et est prévu pour s'engager avec la face supérieure de la plaque (L).

5. Machine selon l'une des revendications précédentes, **caractérisée en ce que** ledit au moins un élément d'engagement (14, 15) comprend des premier (14) et deuxième (15) éléments d'engagement qui sont adaptés pour s'engager avec ledit bord arrière (B) de la plaque à différentes étapes ultérieures, de manière à obtenir la rotation requise de la plaque.

6. Machine selon la revendication 5, **caractérisée en ce que** ledit premier élément d'engagement (14) est porté par la structure fixe de la machine en amont de la plaque et peut se déplacer dans la direction d'avancement (D) de la plaque pour appliquer une force dans ladite direction sur ledit bord arrière (B) afin d'amener la plaque à effectuer une première partie de la rotation requise.

7. Machine selon la revendication 5, **caractérisée en ce que** ledit deuxième élément d'engagement (15) est porté par un pont auxiliaire (3) qui peut se déplacer en dessous du plan de support (2) en aval du pont de coupe fixe (6) et est configuré pour s'engager avec ledit bord arrière (B) de la plaque à travers une fente longitudinale (2a) dudit plan de support (2), ledit pont auxiliaire (3) pouvant se déplacer dans la direction d'avancement de la plaque pour tirer dans ladite direction ledit bord arrière (B) de la plaque à travers ledit deuxième élément d'engagement (15), jusqu'à la fin de la rotation requise.

8. Machine selon la revendication 7, **caractérisée en ce que** ledit pont auxiliaire (3) est pourvu d'un nombre d'éléments d'arrêt (16) qui sont configurés pour être soulevés au-dessus du plan de support (2) à travers des fentes (2a) prévues dans l'établi (1) de manière à arrêter la plaque à une position correspondant à la longueur de coupe requise, ledit deuxième élément d'engagement étant un élément supplémentaire par rapport auxdits éléments d'arrêt qui est prévu sur ledit pont auxiliaire (3) et qui n'est pas adapté pour être utilisé pour la fonction d'arrêt de la plaque (L) mentionnée ci-dessus au niveau de la longueur de coupe requise.

9. Machine selon la revendication 1, **caractérisée en ce que** le moyen d'actionnement permettant d'actionner le déplacement axial dudit élément de ventouse (12a) et le moyen d'actionnement permettant d'entraîner le déplacement axial dudit élément de coopération (12b) sont choisis parmi un actionneur hydraulique, un actionneur pneumatique, et un actionneur électromécanique comprenant un moteur électrique et un système à vis et écrou entraîné par le moteur électrique.
